# FASCICULE DE BREVET EUROPEEN

(11) **EP 1 868 940 B1**
(45) Date de publication et mention de la délivrance du brevet: **20.09.2017**
(21) Numéro de dépôt: 06726332.7
(22) Date de dépôt: 11.04.2006
(51) Int. Cl.: C01B 21/087, C06B 31/00

(54) **OBTENTION DE CRISTAUX DE DINITROAMIDURE D'AMMONIUM (ADN)**
HERSTELLUNG VON AMMONIUMDINITRAMIDKRISTALLEN (ADN)
OBTAINING AMMONIUM DINITRAMIDE (ADN) CRYSTALS

(30) Priorité: 12.04.2005 FR 0503618
(43) Date de publication de la demande: 26.12.2007
(73) Titulaire: HERAKLES, 33185 Le Haillan (FR); Eurenco, 91300 Massy (FR)
(72) Inventeur: BENAZET, Stéphane, F-91700 Sainte Genevieve des Bois (FR); JACOB, Guy, F-91710 Vert le Petit (FR)
(74) Mandataire: Le Roux, Martine
(86) Numéro de dépôt international: PCT/FR2006/050326
(87) Numéro de publication internationale: WO 2006/108991

(56) Documents cités:
- EP-A- 0 953 555
- EP-A- 1 331 213
- WO-A-97/47571
- US-A- 6 136 115
- TEIPEL, ULRICH ET AL: "Crystallization of spherical ammonium dinitramide (ADN) particles" PROPELLANTS, EXPLOSIVES, PYROTECHNICS , 25(2), 81-85 CODEN: PEPYD5; ISSN: 0721-3115, 2000, XP008059172 cité dans la demande
- MALESA M ET AL: "SEPARATION OF AMMONIUM DINITRAMIDE FROM REACTION MIXTURE" PROPELLANTS, EXPLOSIVES, PYROTECHNICS, WEINHEIM, DE, vol. 24, 1999, pages 83-89, XP001095319 cité dans la demande

## Description

La présente invention a pour objet un procédé d'obtention de cristaux de dinitroamidure d'ammonium.

Le dinitroamidure d'ammonium cristallise dans le groupe d'espace P 2₁/a. Les cristaux de l'invention, dans ce même groupe, présentent une forme cristallisée originale, "modifiée". Ceci est ci-après explicité en détail.

Le dinitroamidure d'ammonium répond à la formule :

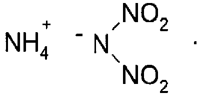

Il est plus communément appelé : "ammonium dinitramide" et connu sous la dénomination : "ADN" (Ammonium DiNitramide).

Il est tout particulièrement connu comme charge oxydante, dépourvue de chlore, susceptible de remplacer le perchlorate d'ammonium dans les compositions de propergols.

Diverses voies de synthèse dudit ADN ont été proposées (elles ont été rappelées par Wang Guogiang, Chen Hong et Ma Yuanying dans Theory Pract. Energ. Mater., [Proc. Int. Autumn Semin. Propellants, Explos. Pyrotech.](1996) 85-91 (Chemical Abstract : 126 : 106102)).

On en met en oeuvre principalement deux :
- la voie dite uréthanne : la nitration et le traitement de l'uréthanne conduisent au sel d'ammonium du N-nitrouréthanne (ANU). Ce sel est ensuite nitré par N₂O₅ dans une réaction en continu pour former le dérivé N, N-dinitré non isolé et mis directement à réagir avec l'ammoniac pour former l'ADN et régénérer l'uréthanne ;
- la voie dite sulfamate : le sulfamate d'ammonium ou de potassium est nitré par un mélange sulfonitrique à basse température puis le milieu réactionnel est neutralisé et généralement concentré.

A l'issue de l'une quelconque de ces voies de synthèse, l'ADN, obtenu en solution, est cristallisé, de façon classique (par concentration, par addition d'un non-solvant et/ou par refroidissement...). Pour l'obtention d'un ADN plus pur chimiquement, Malesa et al. ont préconisé une recristallisation (Propellants, Explosives, Pyrotechnics, 24, 83-89 (1999)).

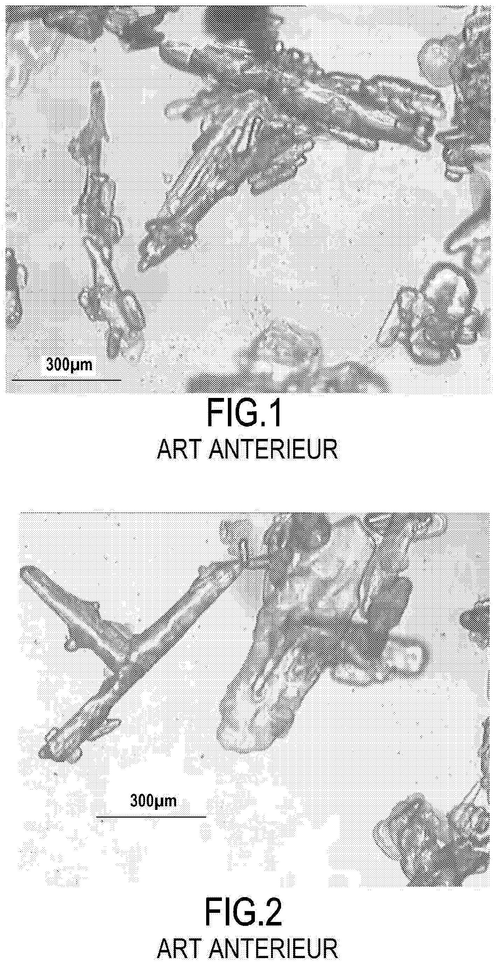

Les cristaux d'ADN brut obtenus se présentent sous la forme de bâtonnets, voire d'aiguilles, caractérisés par un facteur de forme important (ce paramètre, classique, est défini comme le rapport, pour les cristaux, de leur plus grande dimension sur leur plus petite dimension). De tels bâtonnets ou aiguilles sont montrés sur les figures 1 et 2 (photographies prises au microscope optique à transmission). Ils présentent un facteur de forme d'environ 10.

Une telle morphologie de ses cristaux rend l'ADN impropre à la formulation, car la faisabilité des compositions est fortement compromise du fait de la forte augmentation de viscosité dès que l'on vise des taux de charge importants.

Par ailleurs, l'homme du métier n'ignore pas que les cristaux d'ADN brut, obtenus à ce jour, sont relativement hygroscopiques ...

En référence au problème technique de la formulation des cristaux d'ADN brut, rappelé ci-dessus, il a été préconisé de conditionner lesdits cristaux sous forme de billes (EP-A-1 331 213; Propellants, Explosives, Pyrotechnics, 25, 81-85 (2000) ; EP-A-0 953 555 ; WO-A-97/47571 ; US-A-6,136,115 ; WO-A-99/21794; et WO-A-99/01408). L'homme du métier emploie le terme de "prills". Lesdits "prills" (lesdites billes) sont généralement obtenu(e)s, soit en fondant l'ADN sous vive agitation dans un liquide non solvant et en refroidissant ensuite rapidement, soit en utilisant une tour de "prilling", tour au sein de laquelle l'ADN fondu est pulvérisé dans un courant gazeux.

La première de ces techniques, qualifiée de "prilling en suspension", est notamment décrite dans la demande WO-A-99/21794, la seconde dans les demandes WO-A-97/47571 et WO-A-99/01408.

Aucune de ces deux techniques n'est pleinement satisfaisante :
- le "prilling en suspension" est difficile à extrapoler au-delà de quelques kilogrammes par lot ("par batch"), à cause des échanges thermiques avec la double enveloppe du réacteur dans lequel il est mis en oeuvre. Lesdits échanges thermiques limitent la vitesse de refroidissement. Ce problème est d'autant plus critique que le réacteur est de plus grande taille ...
- le "prilling" dans une tour implique la manipulation d'ADN fondu, alors que l'on connaît l'instabilité de ce composé au-delà de son point de fusion. Des phénomènes de surchauffe locale ou d'accumulation de matière sont susceptibles de générer des accidents.

En tout état de cause, lesdites techniques sont des conditionnements, relativement lourds à mettre en oeuvre, d'ADN préalablement obtenu par cristallisation.

Dans un tel contexte, en référence au problème technique de la formulation des cristaux d'ADN, la Demanderesse propose une solution tout à fait originale. Cette solution ne repose pas sur un conditionnement des cristaux bruts obtenus mais sur une modification du procédé d'obtention des cristaux (du procédé de cristallisation) ; elle repose sur la génération de cristaux présentant une forme cristallisée plus adaptée à leur formulation, particulièrement à des taux de concentration élevée. Ladite forme cristallisée peut s'analyser comme une forme cristallisée modifiée (par rapport à la forme cristallisée communément connue, caractérisée par un facteur de forme important) mais il convient de comprendre que la modification résulte d'une modification (amont) du procédé de cristallisation et non pas d'une modification (aval) sur des cristaux obtenus conformément au procédé de cristallisation de l'art antérieur.

Modifier un processus de cristallisation pour générer des cristaux sous une forme cristallisée modifiée n'est pas une opération innovante en elle-même. Ce type d'opération, basé sur l'intervention de modificateurs de la croissance des cristaux, a notamment été mis en oeuvre dans les procédés de préparation de sucres alimentaires. Il n'a toutefois jamais été décrit, à la connaissance de la Demanderesse, dans le contexte de l'ADN, en référence au problème technique de sa formulation.

Dans ce contexte particulier, les inventeurs ont montré, de façon tout à fait surprenante, qu'il est possible d'intervenir sur la cristallisation de l'ADN, en vue de réduire le facteur de forme des cristaux, qu'il existe des additifs de cristallisation, modificateurs de la croissance des cristaux d'ADN :
+ solubles dans les solvants de cristallisation de l'ADN ;
+ performants : aptes à s'adsorber préférentiellement sur les (et à se désorber des) faces qui ont la vitesse de croissance la plus élevée et qui sont donc présentes aux extrémités des bâtonnets ou aiguilles ;
+ et qui affectent peu, voire pas du tout, la nature donc les performances, les propriétés dudit ADN ; ainsi que sa compatibilité avec des partenaires (co-constituants) dans le cadre de son utilisation dans des composites énergétiques du type propergol ou explosif.

La présente invention repose sur l'utilisation d'additifs (de cristallisation) modificateurs du faciès cristallin de l'ADN. Il est du mérite des inventeurs d'avoir transposé le concept de modification du processus de cristallisation dans le contexte de la cristallisation de l'ADN et d'avoir identifié des modificateurs de cristallisation performants dans ce contexte.

Selon son premier objet, la présente invention concerne un procédé d'obtention de cristaux de dinitroamidure d'ammonium (ammonium dinitramide = ADN), à partir d'une solution renfermant ledit ADN en solution dans un solvant. De façon caractéristique, ledit procédé comprend :
- l'addition, à ladite solution, d'une quantité efficace et non excessive d'au moins un modificateur de faciès cristallin capable de réduire le facteur de forme des cristaux ; ledit au moins un modificateur de faciès cristallin étant choisi parmi les sels de cations alcalino-terreux ; et
- la mise en oeuvre de la cristallisation, au sein de ladite solution renfermant ledit au moins un modificateur de faciès cristallin, par tout traitement adéquat.

La cristallisation est mise en oeuvre de façon classique (notamment : par augmentation de la concentration en ADN au sein de la solution (suite à une évaporation du solvant par exemple) et/ou par ajout d'un non-solvant de l'ADN dans ladite solution et/ou par refroidissement de ladite solution. On met avantageusement en oeuvre l'une de ces méthodes mais il n'est pas exclu d'en mettre en oeuvre au moins deux, successivement ou conjointement. L'homme du métier maîtrise parfaitement la mise en oeuvre de ces techniques de cristallisation.) sur une solution qui, outre l'ADN en solution, renferme, de façon caractéristique, une quantité efficace et non excessive d'au moins un modificateur de faciès cristallin. Ledit au moins un modificateur de faciès cristallin convient pour réduire le facteur de forme des cristaux. Ledit au moins un modificateur de faciès cristallin est choisi parmi les sels de cations alcalino-terreux. Ceci est explicité plus avant dans la présente description.

Le solvant de la solution est choisi parmi les solvants de cristallisation de l'ADN, connus. Il peut notamment consister en un alcool, en l'acétone, l'acétonitrile ou un mélange de ces solvants. Il est avantageusement choisi parmi les alcools et leurs mélanges. On préconise tout particulièrement l'utilisation de mélanges éthanol-méthanol.

Ledit au moins un modificateur de faciès cristallin intervient en une quantité efficace et non excessive.

En référence à l'efficacité, sa quantité d'intervention est :
- généralement, d'au moins 0,005 % en poids par rapport au poids d'ADN en solution (d'ADN dissous);
- avantageusement d'au moins 0,01 % en poids par rapport au poids d'ADN en solution ;
- très avantageusement, d'au moins 0,1 % en poids par rapport au poids d'ADN en solution.

Le modificateur de faciès cristallin est avantageusement efficace à faible quantité et donc utilisé en faible quantité. On minimise ainsi le risque de polluer les cristaux, de modifier les propriétés desdits cristaux ...

En référence à ces problèmes, on veille à ne pas utiliser ledit modificateur de faciès cristallin en quantité excessive. On l'utilise généralement à raison de moins de 5 % en poids, par rapport au poids d'ADN en solution ; avantageusement à raison d'au plus 3 % en poids, par rapport au poids d'ADN en solution.

L'homme du métier est à même d'optimiser la quantité d'intervention dudit au moins un modificateur de faciès cristallin, dans le cadre de la mise en oeuvre du procédé de l'invention.

En référence à la nature dudit au moins un modificateur de faciès cristallin, on a vu qu'il est choisi parmi les sels de cations alcalino-terreux.

Il est en fait très avantageusement choisi parmi les sels de calcium et de magnésium.

La nature de l'anion du sel en cause influe peu sur la fonction attendue de modification de la croissance des cristaux d'ADN. Ainsi peut-on *a priori* utiliser tout sel de calcium et de magnésium. On propose ci-après deux longues, mais non exhaustives, listes de sels, une de sels de calcium et une de sels de magnésium, convenant tout particulièrement (pour des raisons pratiques) aux fins de la mise en oeuvre du procédé de l'invention.

**Sels de calcium :**

| Nom | Formule |
|---|---|
| butyrate de calcium | Ca(C₄H₇O₂)₂, H₂O |
| carbonate de calcium | CaCO₃ |
| *per*chlorate de calcium | Ca(ClO₄)₂ |
| chlorure de calcium | CaCl₂ |
| cinnamate de calcium | Ca(C₉H₇O₂)₂, 3H₂O |
| citrate de calcium | Ca(C₆H₅O₇)₂, 4H₂O |
| formate de calcium | Ca(CHO₂)₂ |
| fumarate de calcium | CaC₄H₂O₄, 3H₂O |
| *d*-gluconate de calcium | Ca(C₆H₁₁O₇)₂, H₂O |
| glycérophosphate de calcium | CaC₃H₅(OH)₂PO₄ |
| isobutyrate de calcium | Ca(C₄H₇O₂)₂, 5H₂O |
| lactate de calcium | Ca(C₃H₅O₃)₂, 5H₂O |
| laurate de calcium | Ca(C₁₂H₂₃O₂)₂, H₂O |
| linoléate de calcium | Ca(C₁₈H₃₁O₂)₂ |
| malate de calcium | CaC₄H₄O₅, 2H₂O |
| dihydrogène malate de calcium | Ca(HC₄H₄O₅)₂, 6H₂O |
| maléate de calcium | CaC₄H₂O₄, H₂O |
| malonate de calcium | CaC₃H₂O₄, 4H₂O |
| α-méthylbutyrate de calcium | Ca(C₅H₉O₂)₂ |
| nitrate de calcium | Ca(NO₃)₂ |
| oléate de calcium | Ca(C₁₈H₃₃O₂)₂ |
| oxalate de calcium | CaC₂O₄ |
| palmitate de calcium | Ca(C₁₆H₃₁O₂)₂ |
| 1-phénol-4-sulfonate de calcium | Ca[C₆H₄(OH)SO₃]₂, H₂O |
| *hypo*phosphate de calcium | Ca₂P₂O₆, 2H₂O |
| *méta*phosphate de calcium | Ca(PO₃)₂ |
| di-(sec)*ortho*phosphate de calcium | CaHPO₄, 4H₂O |
| mono-(prim.)*ortho*phosphate de calcium | Ca(H₂PO₄)₂, H₂O |
| tri-(tert.)*ortho*phosphate de calcium | Ca₃(PO₄)₂, H₂O |
| *hypo*phosphite de calcium | Ca(H₂PO₂)₂ |
| di-*ortho*phosphite de calcium | 2CaHPO₃, 3H₂O |
| propionate de calcium | Ca(C₃H₅O₂)₂, H₂O |
| l-quinate de calcium | Ca(C₇H₁₁O₆)₂, 10H₂O |
| salicylate de calcium | Ca(C₇H₅O₃)₂, 2H₂O |
| *méta*silicate de calcium | CaSiO₃ |
| di*-ortho*silicate de calcium | Ca₂SiO₄ |
| silicate de calcium | Ca₃SiO₅ ou (3CaO.SiO₂) |
| stéarate de calcium | Ca(C₁₈H₃₅O₂)₂ |
| succinate de calcium | CaC₄H₆O₄, 3H₂O |
| sulfate de calcium | CaSO₄ |
| tartrate de calcium | CaC₄H₄O₆, 4H₂O |
| valérate de calcium | Ca(C₅H₉O₂)₂ |

**Sels de magnésium :**

| Nom | Formule |
|---|---|
| acétate de magnésium | Mg(C₂H₃O₂)₂ |
| benzoate de magnésium | Mg₃(C₇H₅O₂)₂, 3H₂O |
| bismuth nitrate de magnésium | 3Mg(NO₃)₂.2Bi(NO₃)₂, 24 H₂O |
| *di*borate de magnésium | Mg₂B₂O₄, H₂O |
| *méta*borate de magnésium | Mg(BO₂)₂, 3H₂O |
| *ortho*borate de magnésium | Mg₃(BO₃)₂ |
| carbonate de magnésium | MgCO₃ |
| *per*chlorate de magnésium | Mg(ClO₄)₂ |
| chlorure de magnésium | MgCl₂ |
| mono-H-citrate de magnésium | MgHC₆H₅O₇, 5H₂O |
| formate de magnésium | Mg(CHO₂)₂, 2H₂O |
| lactate de magnésium | Mg(C₃H₅O₃)₂, 3H₂O |
| laurate de magnésium | Mg(C₁₂H₂₃O₂)₂, 2H₂O |
| myristate de magnésium | Mg(C₁₄H₂₇O₂)₂ |
| nitrate de magnésium | Mg(NO₃)₂ |
| oléate de magnésium | Mg(C₁₈H₃₃O₂)₂ |
| oxalate de magnésium | MgC₂O₄, 2H₂O |
| palmitate de magnésium | Mg(C₁₆H₃₁O₂)₂ |
| *ortho*phosphate de magnésium | Mg₃(PO₄)₂ |
| mono-H-*ortho*phosphate de magnésium | MgHPO₄, 3H₂O |
| salicylate de magnésium | Mg(C₇H₅O₃)₂, 4H₂O |
| stéarate de magnésium | Mg(C₁₈H₃₅O₂)₂ |
| sulfate de magnésium | MgSO₄ |
| *d*-tartrate de magnésium | MgC₄H₄O₆, 5H₂O |
| hydrogène *d*-tartrate de magnésium | Mg(HC₄H₄O₆)₂, 4H₂O |
| thiosulfate de magnésium | MgS₂O₃, 6H₂O |

On préconise tout particulièrement de mettre en oeuvre le procédé de l'invention en utilisant, à titre de modificateur de faciès cristallin, le carbonate de calcium (CaCO₃), le nitrate de calcium (Ca(NO₃)₂) ou un mélange de ces deux sels (CaCO₃ + Ca(NO₃)₂).

En référence aux cristaux d'ADN obtenus par le procédé décrit ci-dessus (procédé de cristallisation "modifié", de par la présence d'au moins un modificateur de faciès cristallin lors de sa mise en oeuvre), on peut indiquer ce qui suit.

Lesdits cristaux présentent une forme cristallisée intéressante, un facies cristallin inteéressant. Lesdits cristaux se caractérisent par un facteur de forme faible. La croissance desdits cristaux a été contrariée.

Lesdits cristaux d'ADN présentent un facteur de forme inférieur ou égal à 5 ; et plus particulièrement un facteur de forme compris entre 1,5 et 5 (les valeurs de 1,5 et 5 étant incluses).

A la lecture de ce qui précède, l'homme du métier a, d'ores et déjà, compris le grand intérêt de ces cristaux d'ADN pour utilisation dans l'élaboration de composites énergétiques, notamment de type propergol ou explosif.

Des composites énergétiques, renfermant des charges énergétiques dans un liant, énergétique ou non, dont au moins une partie desdites charges énergétiques consiste en des cristaux tels que décrits ci-dessus et/ou tels qu'obtenus par le procédé décrit ci-dessus, peuvent renfermer une forte teneur en lesdits cristaux. De par la modification du faciès cristallin, on s'exonère en partie des problèmes d'encombrement stérique.

Ainsi de tels composites énergétiques renferment-ils avantageusement plus de 30%, très avantageusement plus de 50 %, en poids desdits cristaux. Ils sont *a priori* susceptible d'en renfermer jusqu'à environ 70 %.

L'homme du métier a d'ores et déjà compris tout l'intérêt de l'invention.

La cristallisation modifiée proposée est une opération simple, facilement extrapolable, dont la mise en oeuvre ne nécessite pas de matériel spécifique et ne présente pas de risque pyrotechnique particulier. Elle peut par ailleurs s'effectuer dans des solvants peu onéreux et non toxiques. Ladite cristallisation est ainsi beaucoup plus intéressante que les techniques de "prilling" évoquées dans l'introduction du présent texte.

Ladite cristallisation modifiée proposée permet d'obtenir des cristaux d'ADN particulièrement intéressants en ce qu'ils rendent possible l'utilisation dudit ADN dans des composites énergétiques à taux de charges élevées. Lesdits cristaux d'ADN sont par ailleurs moins hygroscopiques que ceux de l'art antérieur.

On se propose maintenant d'illustrer l'invention par les exemples ci-après.

Les figures annexées sont des photographies prises au microscope optique à transmission.
Les figures 1 et 2, comme déjà précisé, montrent des cristaux d'ADN de l'art antérieur, du type "bâtonnet" ou "aiguille".

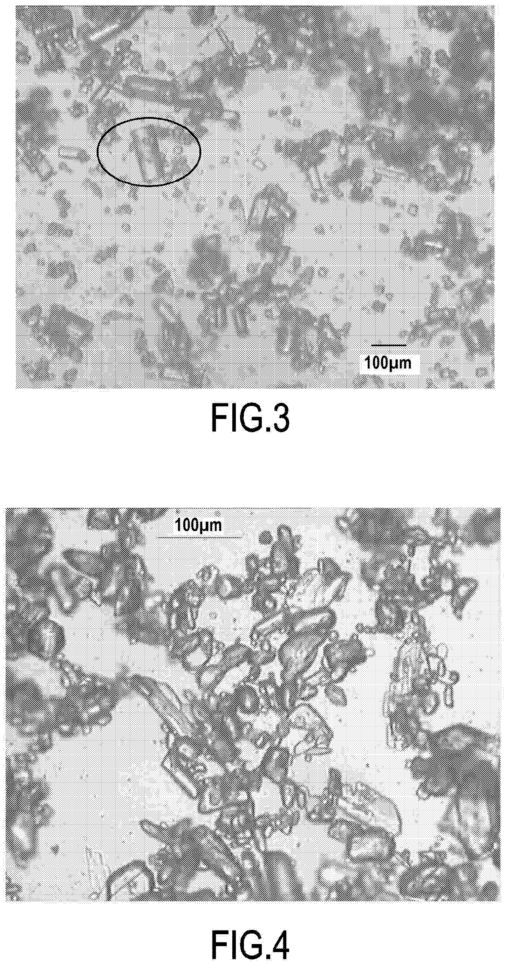

Les figures 3, 4 et 5 montrent des cristaux d'ADN obtenus selon l'invention, respectivement obtenus à l'issue de la mise en oeuvre des exemples 6, 7 et 8.

Les échelles sont indiquées sur chacune desdites figures. Il apparaît clairement que les cristaux obtenus selon l'invention ont un facteur de forme inférieur à celui des cristaux de l'art antérieur montrés sur les figures 1 et 2.

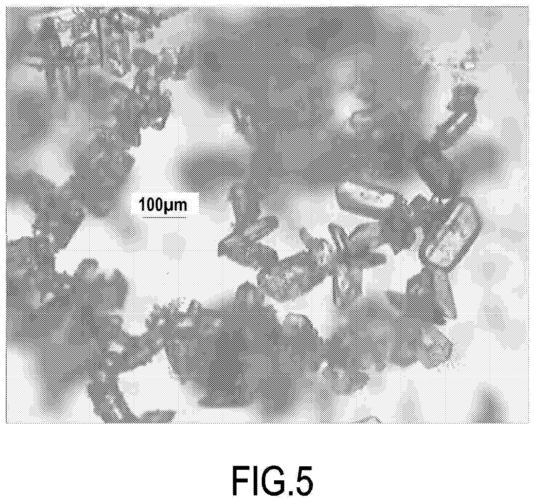

Le cristal entouré sur la figure 5 a un diamètre moyen de 150 µm.

. Des cristaux ont été obtenus selon l'invention par le mode opératoire ci-après, précisé en référence à l'exemple 9.

### MODE OPERATOIRE : exemple 9

Le réacteur utilisé est un réacteur de 750 ml à double enveloppe.

Le réacteur est équipé d'un réfrigérant à boules dont l'extrémité est relié à un système desséchant (cristaux de gel de silice).

La température est contrôlée dans le milieu à l'aide d'une sonde thermique et régulée par une circulation de fluide dans la double enveloppe.

L'agitation (hélice marine) du milieu réactionnel est assurée par un système électrique.

Toute la vaisselle utilisée est préalablement séchée. Le système de cristallisation (réacteur + réfrigérant) est également séché au pistolet chauffant.

On introduit dans le réacteur (ballon) à température ambiante : 400 ml d'éthanol (stocké sous tamis moléculaire), puis 200 g d'ADN (préalablement séché sous vide avec cristaux de gel de silice), on rince avec 100 ml d'éthanol. On met l'agitation en route (600 rpm) puis on introduit 100 g d'ADN sous agitation et on ajoute la solution (60 ml) de méthanol (stockée sous tamis moléculaire) contenant le modificateur de croissance (1,5 g de CaNO₃ + 1,5 g de CaCO₃) qui représente 1% de la masse d'ADN. On rince avec 100 ml d'éthanol.

On porte le mélange, à 65°C, sous agitation, pendant 45 min jusqu'à complète dissolution.

On se place à 400 rpm et on applique la rampe de refroidissement suivante : refroidissement de 60° à 30°C en 45 min, suivi d'un plateau de température à 30°C de 30 min, puis un nouveau refroidissement de 30° à 20°C (ou ambiante) en 1h45.

La suspension est filtrée sur Buchner (papier filtre standard) puis placé à l'étuve à 40°C pendant 2 h. On recueille environ 240 g d'ADN, dont le diamètre moyen des cristaux est 245 µm (distribution large de 50 à 440 µm). L'aspect des cristaux est celui du sucre cristallisé blanc.

Ledit mode opératoire répété dans des conditions similaires a permis d'obtenir les résultats donnés dans le tableau ci-après (exemples 1 à 8).

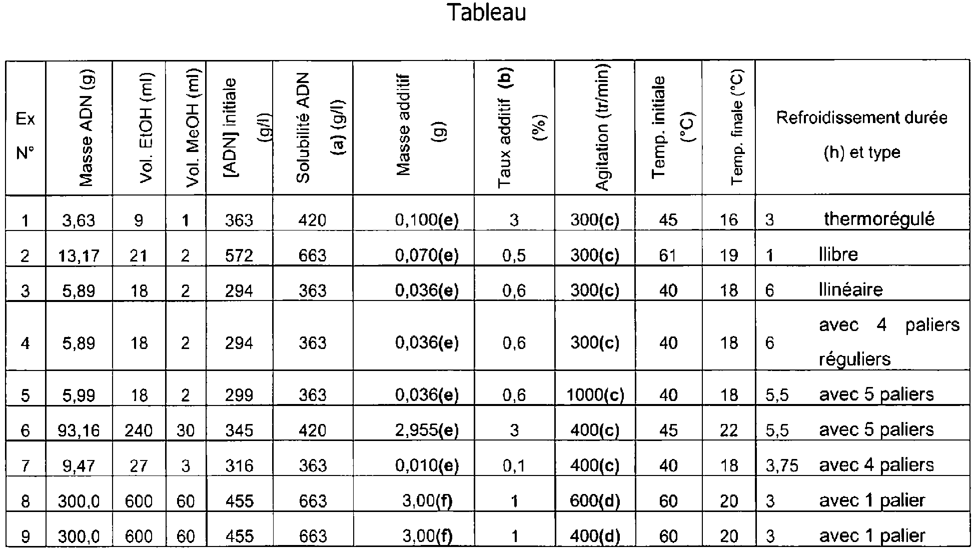

Conditions d'expérimentation de la cristallisation de l'ADN en présence d'additif. ***(a)** dans l'éthanol pur à la température initiale, (b) par rapport à la masse d'ADN introduit, (c) barreau aimanté, (d) hélice marine, (e) additif = CaCO₃, **(f)** additif* = *mélange 50*/*50 (en masse) de CaCO₃ et Ca(NO₃)₂*

. Des cristaux obtenus selon l'art antérieur (ADN brut purifié chimiquement) et des cristaux obtenus selon l'invention (ceux obtenus selon l'exemple 6) ont été utilisés pour réaliser des pâtes explosives. Lesdits cristaux sont issus d'un même lot de fabrication (en fait, les cristaux obtenus selon l'invention sont obtenus après dissolution de cristaux obtenus selon l'art antérieur et re-cristallisation en présence d'un modificateur de croissance).

Lesdites pâtes présentent la composition pondérale suivante :
43% d'ADN
12% de liant PBHT
20% d'hexogène et
25% d'aluminium.

La pâte renfermant les cristaux obtenus selon l'art antérieur présente une viscosité de 10,2 kPoise, tandis que celle renfermant les cristaux obtenus selon l'invention présente une viscosité de 5,6 kPoise. A la considération de ces chiffres, on saisit tout l'intérêt de la présente invention.

. Des cristaux obtenus selon l'art antérieur (ADN brut purifié chimiquement) et des cristaux obtenus selon l'invention (ceux obtenus selon l'exemple 9) ont été testés en référence à leurs propriétés hygroscopiques. Lesdits cristaux sont issus d'un même lot de fabrication (en fait, les cristaux obtenus selon l'invention sont obtenus après dissolution de cristaux obtenus selon l'art antérieur et re-cristallisation en présence des modificateurs de croissance).

On a mesuré la reprise d'humidité à l'aide d'une balance de grande précision située dans une enceinte à humidité relative contrôlée. Après une phase de séchage de 25 h, la reprise d'humidité (dm/m0) est plus faible pour l'ADN cristallisé selon l'invention que pour l'ADN cristallisé de façon classique. Après 5h sous humidité relative (HR) de 65%, l'ADN à facteur de morphologie modifié offre une utilisation pratique prolongée d'environ 3 h par rapport à l'ADN qui n'a pas été cristallisé selon le nouveau procédé (brut purifié) : la cinétique de prise en eau est ralentie.

## Revendications

1. Procédé d'obtention de cristaux de dinitroamidure d'ammonium (ammonium dinitramide = ADN), à partir d'une solution renfermant ledit ADN en solution dans un solvant, **caractérisé en ce qu'**il comprend :
- l'addition, à ladite solution, d'une quantité efficace et non excessive d'au moins un modificateur de faciès cristallin capable de réduire le facteur de forme des cristaux ; ledit au moins un modificateur de faciès cristallin étant choisi parmi les sels de cations alcalino-terreux ; et
- la mise en oeuvre de la cristallisation, au sein de ladite solution renfermant ledit au moins un modificateur de faciès cristallin, par tout traitement adéquat.

2. Procédé selon la revendication 1, **caractérisé en ce que** ladite cristallisation est mise en oeuvre par augmentation de la concentration en ADN au sein de ladite solution et/ou par ajout d'un non-solvant de l'ADN dans ladite solution et/ou par refroidissement de ladite solution.

3. Procédé selon la revendication 1 ou 2, **caractérisé en ce que** le solvant de ladite solution est choisi parmi les alcools et leurs mélanges.

4. Procédé selon l'une quelconque des revendications 1 à 3, **caractérisé en ce que** ladite quantité efficace et non excessive est supérieure ou égale à 0,005 % en poids, avantageusement supérieure ou égale à 0,01 % en poids, très avantageusement supérieure ou égale à 0,1 % en poids, du poids d'ADN en solution.

5. Procédé selon l'une quelconque des revendications 1 à 4, **caractérisé en ce que** ladite quantité efficace et non excessive est inférieure à 5 % en poids, du poids d'ADN en solution.

6. Procédé selon l'une quelconque des revendications 1 à 5, **caractérisé en ce que** ledit au moins un modificateur de faciès cristallin est choisi parmi les sels de calcium et/ou de magnésium.

7. Procédé selon l'une quelconque des revendications 1 à 6, **caractérisé en ce que** ledit au moins un modificateur de faciès cristallin est choisi parmi les sels de calcium ci-après :
| Nom | Formule |
|---|---|
| butyrate de calcium | Ca(C₄H₇O₂)₂, H₂O |
| carbonate de calcium | CaCO₃ |
| *per*chlorate de calcium | Ca(ClO₄)₂ |
| chlorure de calcium | CaCl₂ |
| cinnamate de calcium | Ca(C₉H₇O₂)₂, 3H₂O |
| citrate de calcium | Ca(C₆H₅O₇)₂, 4H₂O |
| formate de calcium | Ca(CHO₂)₂ |
| fumarate de calcium | CaC₄H₂O₄, 3H₂0 |
| *d*-gluconate de calcium | Ca(C₆H₁₁O₇)₂, H₂O |
| glycérophosphate de calcium | CaC₃H₅(OH)₂PO₄ |
| isobutyrate de calcium | Ca(C₄H₇O₂)₂, 5H₂O |
| lactate de calcium | Ca(C₃H₅O₃)₂, 5H₂O |
| laurate de calcium | Ca(C₁₂H₂₃O₂)₂, H₂O |
| linoléate de calcium | Ca(C₁₈H₃₁O₂)₂ |
| malate de calcium | CaC₄H₄O₅, 2H₂O |
| dihydrogène malate de calcium | Ca(HC₄H₄O₅)₂, 6H₂O |
| maléate de calcium | CaC₄H₂O₄, H₂O |
| malonate de calcium | CaC₃H₂O₄, 4H₂O |
| α-méthylbutyrate de calcium | Ca(C₅H₉O₂)₂ |
| nitrate de calcium | Ca(NO₃)₂ |
| oléate de calcium | Ca(C₁₈H₃₃O₂)₂ |
| oxalate de calcium | CaC₂O₄ |
| palmitate de calcium | Ca(C₁₆H₃₁O₂)₂ |
| 1-phénol-4-sulfonate de calcium | Ca[C₆H₄(OH)SO₃]₂, H₂O |
| *hypo*phosphate de calcium | Ca₂P₂O₆, 2H₂O |
| *méta*phosphate de calcium | Ca(PO₃)₂ |
| di-(sec)*ortho*phosphate de calcium | CaHPO₄, 4H₂O |
| mono-(prim.)*ortho*phosphate de calcium | Ca(H₂PO₄)₂, H₂O |
| tri-(tert.)*ortho*phosphate de calcium | Ca₃(PO₄)₂, H₂O |
| *hypo*phosphite de calcium | Ca(H₂PO₂)₂ |
| di-*ortho*phosphite de calcium | 2CaHPO₃, 3H₂O |
| propionate de calcium | Ca(C₃H₅O₂)₂, H₂O |
| l-quinate de calcium | Ca(C₇H₁₁O₆)₂, 10H₂O |
| salicylate de calcium | Ca(C₇H₅O₃)₂, 2H₂O |
| *méta*silicate de calcium | CaSiO₃ |
| di-*ortho*silicate de calcium | Ca₂SiO₄ |
| silicate de calcium | Ca₃SiO₅ ou (3CaO.SiO₂) |
| stéarate de calcium | Ca(C₁₈H₃₅O₂)₂ |
| succinate de calcium | CaC₄H₆O₄, 3H₂O |
| sulfate de calcium | CaSO₄ |
| tartrate de calcium | CaC₄H₄O₆, 4H₂O |
| valérate de calcium | Ca(C₅H₉O₂)₂ |
et les sels de magnésium ci-après :
| Nom | Formule |
|---|---|
| acétate de magnésium | Mg(C₂H₃O₂)₂ |
| benzoate de magnésium | Mg₃(C₇H₅O₂)₂, 3H₂O |
| bismuth nitrate de magnésium | 3Mg(NO₃)₂.2Bi(NO₃)₂, 24 H₂O |
| *di*borate de magnésium | Mg₂B₂O_{4,} H₂O |
| *méta*borate de magnésium | Mg(BO₂)₂, 3H₂O |
| *ortho*borate de magnésium | Mg₃(BO₃)₂ |
| carbonate de magnésium | MgCO₃ |
| *per*chlorate de magnésium | Mg(ClO₄)₂ |
| chlorure de magnésium | MgCl₂ |
| mono-H-citrate de magnésium | MgHC₆H₅O₇, 5H₂O |
| formate de magnésium | Mg(CHO₂)₂, 2H₂O |
| lactate de magnésium | Mg(C₃H₅O₃)₂, 3H₂O |
| laurate de magnésium | Mg(C₁₂H₂₃O₂)₂, 2H₂O |
| myristate de magnésium | Mg(C₁₄H₂₇O₂)₂ |
| nitrate de magnésium | Mg(NO₃)₂ |
| oléate de magnésium | Mg(C₁₈H₃₃O₂)₂ |
| oxalate de magnésium | MgC₂O₄, 2H₂O |
| palmitate de magnésium | Mg(C₁₆H₃₁O₂)₂ |
| *ortho*phosphate de magnésium | Mg₃(PO₄)₂ |
| mono-H-*ortho*phosphate de magnésium | MgHPO₄, 3H₂O |
| salicylate de magnésium | Mg(C₇H₅O₃)₂, 4H₂O |
| stéarate de magnésium | Mg(C₁₈H₃₅O₂)₂ |
| sulfate de magnésium | MgSO₄ |
| *d-*tartrate de magnésium | MgC₄H₄O₆, 5H₂O |
| hydrogène *d-*tartrate de magnésium | Mg(HC₄H₄O₆)₂, 4H₂O |
| thiosulfate de magnésium | MgS₂O₃, 6H₂O |

8. Procédé selon l'une quelconque des revendications 1 à 7, **caractérisé en ce que** ledit au moins un modificateur de faciès cristallin est choisi parmi le carbonate de calcium (CaCO₃), le nitrate de calcium (Ca(NO₃)₂) et leurs mélanges (CaCO₃ + Ca(NO₃)₂).

## Patentansprüche

1. Verfahren zur Herstellung von Ammoniumdinitramidkristallen (Ammoniumdinitramid = ADN) aus einer Lösung, die das ADN in Lösung in einem Lösungsmittel einschließt, **dadurch gekennzeichnet, dass** es umfasst:
- die Beigabe einer wirksamen und nicht übermäßigen Menge mindestens eines Kristallstruktur-Modifikators, der geeignet ist, den Formfaktor der Kristalle zu verringern; wobei der mindestens eine Kristallstruktur-Modifikator unter den erdalkalischen Kationensalzen ausgewählt ist, und
- den Einsatz der Kristallisierung innerhalb der Lösung, die den mindestens einen Kristallstruktur-Modifikator einschließt, durch jede adäquate Behandlung.

2. Verfahren gemäß Anspruch 1, **dadurch gekennzeichnet, dass** die Kristallisierung durch Erhöhung der ADN-Konzentration innerhalb der Lösung und/oder durch Beigabe eines die ADN nicht lösenden Mittels zu der Lösung und/oder durch Kühlen der Lösung eingesetzt wird.

3. Verfahren gemäß Anspruch 1 oder 2, **dadurch gekennzeichnet, dass** das Lösungsmittel der Lösung unter den Alkoholen und ihren Mischungen ausgewählt ist.

4. Verfahren gemäß einem der Ansprüche 1 bis 3, **dadurch gekennzeichnet, dass** die wirksame und nicht übermäßige Menge größer oder gleich 0,005 Gew.-%, vorteilhafterweise größer oder gleich 0,01 Gew.-%, sehr vorteilhafterweise größer oder gleich 0,1 Gew.-% des Gewichts von ADN in Lösung ist.

5. Verfahren gemäß einem der Ansprüche 1 bis 4, **dadurch gekennzeichnet, dass** die wirksame und nicht übermäßige Menge kleiner als 5 Gew.-% des Gewichts von ADN in Lösung ist.

6. Verfahren gemäß einem der Ansprüche 1 bis 5, **dadurch gekennzeichnet, dass** der mindestens eine Kristallstruktur-Modifikator unter den Kalzium- und/oder Magnesiumsalzen ausgewählt ist.

7. Verfahren gemäß einem der Ansprüche 1 bis 6, **dadurch gekennzeichnet, dass** der mindestens eine Kristallstruktur-Modifikator ausgewählt ist unter den nachstehenden Kalziumsalzen:
| Name | Formel |
|---|---|
| Kalziumbutyrat | Ca(C₄H₇O₂)₂, H₂O |
| Kalziumkarbonat | CaCO₃ |
| Kalziumperchlorat | Ca(ClO₄)₂ |
| Kalziumchlorid | CaCl₂ |
| Kalziumcinnamat | Ca(C₉H₇O₂)₂, 3H₂O |
| Kalziumcitrat | C₈(C₆H₅O₇)₂, 4H₂O |
| Kalziumformat | Ca(CHO₂)₂ |
| Kalziumfumarat | C₈C₄H₂O₄, 3H₂O |
| d-Kalziumgluconat | Ca(C₆H₁₁O₇)₂, H₂O |
| Kalziumglycerophosphat | CaC₃H₅(OH)₂, PO₄ |
| Kalziumisobutyrat | Ca(C₄H₇O₂)₂, 5H₂O |
| Kalziumlactat | Ca(C₃H₅O₃)₂, 5H₂O |
| Kalziumlaurat | Ca(C₁₂H₂₃O₂)₂, H₂O |
| Kalziumlinoleat | Ca(C₁₈H₃₁O₂)₂ |
| Kalziummalat | CaC₄H₄O₅, 2H₂O |
| Kalziummalatdihydrogen | Ca(C₄H₄O₅)₂, 6H₂O |
| Kalziummaleat | C₈C₄H₂O₄, H₂O |
| Kalziummalonat | C₈C₃H₂O₄, 4H₂O |
| α-Kalziummethylbutyrat | Ca(C₅H₉O₂)₂ |
| Kalziumnitrat | Ca(NO₃)₂ |
| Kalziumoleat | Ca(C₁₈H₃₃O₂)₂ |
| Kalziumoxalat | CaC₂O₄ |
| Kalziumpalmitat | Ca(C₁₆H₃₁O₂)₂ |
| 1-Phenol-4-Kalziumsulfonat | Ca[C₆H₄(OH)SO₃]₂, H₂O |
| Kalziumhypophosphat | Ca₂P₂O₆, 2H₂O |
| Kalziummetaphosphat | Ca(PO₃)₂ |
| Di-(sec)Kalziumorthophosphat | CaHPO₄, 4H₂O |
| Mono-(prim.)Kalziumorthophosphat | Ca(H₂PO₄)₂, H₂O |
| Tri-(tert.)Kalziumorthophosphat | Ca₃(PO₄)₂, H₂O |
| Kalziumhyppohosphit | Ca(H₂PO₂)₂ |
| Di-Kalziumorthophosphit | 2CaHPO₃, 3H₂O |
| Kalziumpropionat | Ca(C₃H₅O₂)₂, H₂O |
| I-Kalziumquinat | Ca(C₇H₁₁O₆)₂, 10H₂O |
| Kalziumsalicylat | Ca(C₇H₅O₃)₂, 2H₂O |
| Kalziummetasilikat | CaSiO₃ |
| Di-Kalziumorthosilikat | Ca₂SiO₄ |
| Kalziumsilikat | Ca₃SiO₅ oder (3CaO.SiO₂) |
| Kalziumstearat | Ca(C₁₈H₃₅O₂)₂ |
| Kalziumsuccinat | CaC₄H₆O₄, 3H₂O |
| Kalziumsulfat | CaSO₄ |
| Kalziumtartrat | CaC₄H₄O₆, 4H₂O |
| Kalziumvalerat | Ca(C₅H₉O₂)₂ |
und den nachstehenden Magnesiumsalzen:
| Name | Formel |
|---|---|
| Magnesiumacetat | Mg(C₂H₃O₂)₂ |
| Magnesiumbenzoat | Mg₃(C₇H₅O₂)₂ 3H₂O |
| Wismutmagnesiumnitrat | 3Mg(NO₃)₂.2Bi(NO₃)₂, 24H₂O |
| Magnesiumdiborat | Mg₂B₂O_{4,} H₂O |
| Magnesiummetaborat | Mg(BO₂)₂, 3H₂O |
| Magnesiumorthoborat | Mg₃(BO₃)₂ |
| Magnesiumkarbonat | MgCO₃ |
| Magnesiumperchlorat | Mg(ClO₄)₂ |
| Magnesiumchlorid | MgCl₂ |
| Mono-H-Magnesiumcitrat | MgHC₆H₅O₇, 5H₂O |
| Magnesiumformat | Mg(CHO₂)₂, 2H₂O |
| Magnesiumlactat | Mg(C₃H₅O₃)₂, 3H₂O |
| Magnesiumlaurat | Mg(C₁₂H₂₃O₂)₂ 2H₂O |
| Magnesiummyristat | Mg(C₁₄H₂₇O₂)₂ |
| Magnesiumnitrat | Mg(NO₃)₂ |
| Magnesiumoleat | Mg(C₁₈H₃₃O₂)₂ |
| Magnesiumoxalat | MgC₂O₄, 2H₂O |
| Magnesiumpalmitat | Mg(C₁₆H₃₁O₂)₂ |
| Magnesiumorthophosphat | Mg₃(PO₄)₂ |
| Mono-H-Magnesiumorthophosphat | MgHPO₄, 3H₂O |
| Magnesiumsalicylat | Mg(C₇H₅O₃)₂, 4H₂O |
| Magnesiumstearat | Mg(C₁₈H₃₅O₂)₂ |
| Magnesiumsulfat | MgSO₄ |
| d-Magnesiumtartrat | MgC₄H₄O₆, 5H₂O |
| d-Magnesiumtartrathydrogen | Mg(HC₄H₄O₆)₂, 4H₂O |
| Magnesiumthiosulfat | MgS₂O₃,6H₂O |

8. Verfahren gemäß einem der Ansprüche 1 bis 7, **dadurch gekennzeichnet, dass** der mindestens eine Kristallstruktur-Modifikator ausgewählt ist unter dem Kalziumkarbonat (CaCO₃), dem Kalziumnitrat (Ca(NO₃)₂) und ihren Mischungen (CaCO₃ + Ca(NO₃)₂).

## Claims

1. A process for obtaining ammonium dinitroamide (ammonium dinitramide = ADN) crystals from a solution containing said ADN in a solvent, comprising:
- the addition, to said solution, of an effective and non-excessive amount of at least one crystal habit modifier capable of reducing the shape factor of the crystals; said at least one crystal habit modifier being selected from the salts of alkaline earth metal cations; and
- the implementation of crystallization, in said solution containing said at least one crystal habit modifier, by any appropriate treatment.

2. The process according to claim 1, **characterized in that** said crystallization is carried out by increasing the concentration of ADN in said solution, and/or by adding a non-solvent for ADN in said solution, and/or by cooling said solution.

3. The process according to claim 1 or 2, **characterized in that** the solvent of said solution is selected from alcohols and mixtures thereof.

4. The process according to any one of claims 1 to 3, **characterized in that** said effective and non-excessive amount is greater than or equal to 0.005% by weight, advantageously greater than or equal to 0.01% by weight and very advantageously greater than or equal to 0.1% by weight, based on the weight of ADN in solution.

5. The process according to any one of claims 1 to 4, **characterized in that** said effective and non-excessive amount is less than 5% by weight, based on the weight of ADN in solution.

6. The process according to any one of claims 1 to 5, **characterized in that** said at least one crystal habit modifier is selected from calcium and/or magnesium salts.

7. The process according to any one of claims 1 to 6, **characterized in that** said at least one crystal habit modifier is selected from the following calcium salts:
| Name | Formula |
|---|---|
| calcium butyrate | Ca(C₄H₇O₂)₂.H₂O |
| calcium carbonate | CaCO₃ |
| calcium *per*chlorate | Ca(ClO₄)₂ |
| calcium chloride | CaCl₂ |
| calcium cinnamate | Ca(C₉H₇O₂)₂.3H₂O |
| calcium citrate | Ca(C₆H₅O₇)₂.4H₂O |
| calcium formate | Ca(CHO₂)₂ |
| calcium fumarate | CaC₄H₂O₄.3H₂O |
| calcium *d*-gluconate | Ca(C₆H₁₁O₇)₂.H₂O |
| calcium glycerophosphate | CaC₃H₅(OH)₂PO₄ |
| calcium isobutyrate | Ca(C₄H₇O₂)₂.5H₂O |
| calcium lactate | Ca(C₃H₅O₃)₂.5H₂O |
| calcium laurate | Ca(C₁₂H₂₃O₂)₂.H₂O |
| calcium linoleate | Ca(C₁₈H₃₁O₂)₂ |
| calcium malate | CaC₄H₄O₅.2H₂O |
| calcium dihydrogen malate | Ca(HC₄H₄O₅)₂.6H₂O |
| calcium maleate | CaC₄H₂O_{4.}H₂O |
| calcium malonate | CaC₃H₂O₄.4H₂O |
| calcium α-methylbutyrate | Ca(C₅H₉O₂)₂ |
| calcium nitrate | Ca(NO₃)₂ |
| calcium oleate | Ca(C₁₈H₃₃O₂)₂ |
| calcium oxalate | CaC₂O₄ |
| calcium palmitate | Ca(C₁₆H₃₁O₂)₂ |
| calcium 1-phenol-4-sulfonate | Ca[C₆H₄(OH)SO₃]₂.H₂O |
| calcium *hypo*phosphate | Ca₂P₂O₆.2H₂O |
| calcium *meta*phosphate | Ca(PO₃)₂ |
| calcium di(sec)*ortho*phosphate | CaHPO₄.4H₂O |
| calcium mono(prim)*ortho*phosphate | Ca(H₂PO₄)₂.H₂O |
| calcium tri(tert)*ortho*phosphate | Ca₃(PO₄)₂.H₂O |
| calcium *hypo*phosphite | Ca(H₂PO₂)₂ |
| calcium di*ortho*phosphite | 2CaHPO₃.3H₂O |
| calcium propionate | Ca(C₃H₅O₂)₂.H₂O |
| calcium 1-quinate | Ca(C₇H₁₁O₆)₂.10H₂O |
| calcium salicylate | Ca(C₇H₅O₃)₂.2H₂O |
| calcium *meta*silicate | CaSiO₃ |
| calcium di*ortho*silicate | Ca₂SiO₄ |
| calcium silicate | Ca₃SiO₅ or (3CaO.SiO₂) |
| calcium stearate | Ca(C₁₈H₃₅O₂)₂ |
| calcium succinate | CaC₄H₆O₄.3H₂O |
| calcium sulfate | CaSO₄ |
| calcium tartrate | CaC₄H₄O₆.4H₂O |
| calcium valerate | Ca(C₅H₉O₂)₂ |
and the following magnesium salts:
| Name | Formula |
|---|---|
| magnesium acetate | Mg(C₂H₃O₂)₂ |
| magnesium benzoate | Mg₃(C₇H₅O₂)₂.3H₂O |
| magnesium bismuth nitrate | 3Mg(NO₃)₂.2Bi(NO₃)₂.24 H₂O |
| magnesium *di*borate | Mg₂B₂O₄. H₂O |
| magnesium *meta*borate | Mg(BO₂)₂.3H₂O |
| magnesium *orthoborate* | Mg₃(BO₃)₂ |
| magnesium carbonate | MgCO₃ |
| magnesium *per*chlorate | Mg(ClO₄)₂ |
| magnesium chloride | MgCl₂ |
| magnesium mono-H-citrate | MgHC₆HₛO₇.5H₂O |
| magnesium formate | Mg(CHO₂)₂.2H₂O |
| magnesium lactate | Mg(C₃H₅O₃)₂.3H₂O |
| magnesium laurate | Mg(C₁₂H₂₃O₂)₂.2H₂O |
| magnesium myristate | Mg(C₁₄H₂₇O₂)₂ |
| magnesium nitrate | Mg(NO₃)₂ |
| magnesium oleate | Mg(C₁₈H₃₃O₂)₂ |
| magnesium oxalate | MgC₂O₄.2H₂O |
| magnesium palmitate | Mg(C₁₆H₃₁O₂)₂ |
| magnesium *ortho*phosphate | MH₃(PO₄)₂ |
| magnesium mono-H-*ortho*phosphate | MgHPO₄.3H₂O |
| magnesium salicylate | Mg(C₇H₅O₃)₂.4H₂O |
| magnesium stearate | Mg(C₁₈H₃₅O₂)₂ |
| magnesium sulfate | MgSO₄ |
| magnesium *d-*tartrate | MgC₄H₄O₆.5H₂O |
| magnesium hydrogen *d-*tartrate | Mg(HC₄H₄O₆)₂.4H₂O |
| magnesium thiosulfate | MeS₂O₃.6H₂O |

8. The process according to any one of claims 1 to 7, **characterized in that** said at least one crystal habit modifier is selected from calcium carbonate (CaCO₃), calcium nitrate (Ca(NO₃)₂) and mixtures thereof (CaCO₃ + Ca(NO₃)₂).
